# EUROPEAN PATENT APPLICATION

(11) **EP 4 760 963 A1**
(43) Date of publication of application: **17.06.2026**
(21) Application number: 24851139.6
(22) Date of filing: 09.08.2024
(51) Int. Cl.: H01M 50/507, H01M 50/503, H01M 50/502, H01M 50/50, H01M 50/00

(54) **MODULE CONNECTION STRUCTURE AND POWER BATTERY**

(30) Priority: 10.08.2023 CN 202322152287 U
(71) Applicant: SVOLT Energy Technology Co., Ltd., Changzhou, Jiangsu 213200 (CN)
(72) Inventor: ZHANG, Hongrui, hangzhou, Jiangsu 213200 (CN); ZHANG, Jiajia, hangzhou, Jiangsu 213200 (CN)
(74) Representative: Michalski Hüttermann & Partner mbB
(86) International application number: PCT/CN2024/111207
(87) International publication number: WO 2025/031495

(57) **Abstract**

The present application relates to the technical field of batteries, and in particular, relates to a module connection structure and a power battery. The module connection structure includes: modules; current collecting members, where the current collecting member includes a first connection portion and a second connection portion, and the first connection portion is connected to the module; and support bases, where the second connection portions of the current collecting members on the adjacent modules are stacked and fixed to the same support base. Overlap portions of two current collecting members are fixed to the same support base by partially stacking the current collecting members, thereby connecting the two modules in series. On the basis of ensuring the connection strength and connection stability between the current collecting member and the module and between the current collecting members, such design effectively reduces space occupation of module connection positions, connection difficulty, and time consumption for module connection, and can effectively reduce the sizes of voltage integration modules. Therefore, the module connection structure is suitable for most types of module connections and battery packaging and assembly processes.

## Description

### CROSS REFERENCE TO RELATED APPLICATION

The present application claims priority to Chinese Patent Application No. 2023221522877 filed with the China National Intellectual Property Administration on August 10, 2023, and entitled "MODULE CONNECTION STRUCTURE AND POWER BATTERY", which is incorporated herein by reference in entirety.

### TECHNICAL FIELD

The present application relates to the technical field of batteries, and in particular, relates to a module connection structure and a power battery.

### BACKGROUND ART

As the demand increases, the endurances of electric vehicles are highly required, leading to a greater need for battery pack capacity. In the pursuit of higher-capacity battery packs, the sizes of battery cells and modules have also gradually increased. This increases assembly difficulty to some extent, and makes the assembly more time-consuming for workers. Additionally, if the lengths of modules increase indefinitely, the difficulty in voltage integration and collection management also grows, making it difficult to control manufacturing feasibility.

### SUMMARY

In view of this, the present application aims to provide a module connection structure and a power battery that, to some extent, solve the technical problem of difficult and time-consuming assembly of existing battery packs, especially large-capacity and large-sized battery packs, in the prior art.

In order to achieve the above objective, technical solutions employed in embodiments of the present application are as follows:

The present application provides a module connection structure, including: modules;
current collecting members, where the current collecting member includes a first connection portion and a second connection portion, and the first connection portion is connected to the module; and
support bases, where the second connection portions of the current collecting members on the adjacent modules are stacked and fixed to the same support base.

In the above technical solution, furthermore, the current collecting member further includes a bent connection portion, and the bent connection portion is located between the first connection portion and the second connection portion.

In any of the above technical solutions, furthermore, the first connection portion is provided with a first fixing portion, and the first fixing portion is connected to an end surface of the module; and

the second connection portion is provided with a second fixing portion, the support base is provided with a third fixing portion, and the second fixing portion is connected to the third fixing portion.

In any of the above technical solutions, furthermore, the second connection portion and the first connection portion are located in different planes, and the second connection portion is provided with the second fixing portion; the second connection portion is erected on the support base, and the second fixing portion is connected to the support base.

In any of the above technical solutions, furthermore, the module connection structure further includes a fixed beam, the fixed beam is formed with a mounting portion, and the support base is arranged on the mounting portion; and
a height of the mounting portion is less than a height of the fixed beam.

In any of the above technical solutions, furthermore, a thickness of the mounting portion is less than a thickness of the fixed beam.

In any of the above technical solutions, furthermore, a first distance is formed between the bent connection portion and the mounting portion; and a second distance is formed between the module and the fixed beam, where the first distance is greater than the second distance.

In any of the above technical solutions, furthermore, the fixed beam is provided with an insulating layer.

In any of the above technical solutions, furthermore, the module connection structure further includes a protective cover, and the protective cover is arranged on the support base.

The present application further provides a power battery, including the module connection structure as described in any of the above technical solutions. Therefore, the power battery has all beneficial technical effects of the module connection structure. Details will not be repeated here.

Compared with the prior art, the beneficial effects of the present application are as follows:

The module connection structure provided in the present application includes: modules; current collecting members, where the current collecting member includes a first connection portion and a second connection portion, and the first connection portion is connected to the module; and support bases, where the second connection portions of the current collecting members on the adjacent modules are stacked and fixed to the same support base.

Overlap portions of two current collecting members are fixed to the same support base by partially stacking the current collecting members, thereby connecting the two modules in series. On the basis of ensuring the connection strength and connection stability between the current collecting member and the module and between the current collecting members, such design effectively reduces space occupation of module connection positions, connection difficulty, and time consumption for module connection, and can effectively reduce the sizes of voltage integration modules. Therefore, the module connection structure is suitable for most types of module connections and battery packaging and assembly processes.

The power battery provided in the present application includes the module connection structure described above. Therefore, the module connection structure can effectively reduce the operational difficulty and time consumption of module connection, effectively reduce the space occupied by the module connection positions inside the battery pack, facilitate reasonable layout of the battery pack space, and help reduce the overall size of the battery pack.

### BRIEF DESCRIPTION OF DRAWINGS

To describe the technical solutions in the embodiments of the present application or in the prior art more clearly, the following briefly describes the accompanying drawings required for describing the specific embodiments or the prior art. Apparently, the accompanying drawings in the following description show merely some embodiments of the present application, and a person of ordinary skill in the art can still derive other drawings from these drawings without inventive efforts.
FIG. 1 is a schematic structural diagram of a module connection structure provided in the embodiments of the present application; and
FIG. 2 is a schematic exploded structural diagram of the module connection structure provided in the embodiments of the present application.

### Reference numerals:

1 - first module, 2 - second module, 3 - first current collecting member, 4 - second current collecting member, 5 - first connection portion, 6 - second connection portion, 7 - bent connection portion, 8 - first fixing portion, 9 - second fixing portion, 10 - support base, 11 - third fixing portion, 12 - fixed beam, 13 - mounting portion, 14 - fastener, 15 - protective cover.

### DETAILED DESCRIPTION OF EMBODIMENTS

Technical solutions in the present application will be clearly and completely described with reference to the accompanying drawings. Apparently, the described embodiments are some but not all of the embodiments of the present application.

Components in the embodiments of the present application, described and shown in the drawings, can be arranged and designed in various different configurations. Therefore, the detailed descriptions of the embodiments of the present application provided in the drawings below are not intended to limit the scope of the present application, but are merely representatives of the selected embodiments of the present application.

Based on the embodiments of the present application, all other embodiments obtained by those of ordinary skill in the art without any creative efforts fall within the scope of protection of the present application.

In the description of the present application, it should be noted that the orientations or positional relationships indicated by the terms "center", "upper", "lower", "left", "right", "vertical", "horizontal", "inner", "outer", etc. are based on the orientations or positional relationships shown in the accompanying drawings, and are intended to facilitate the description of the present application and simplify the description only, rather than indicating or implying that the device or element referred to must have a particular orientation or be constructed and operated in a particular orientation. Therefore, these terms cannot be interpreted as limiting the present application. Furthermore, the terms "first", "second" and "third" are only for the sake of description, and cannot be understood as indicating or implying the relative importance.

In the description of the present application, it should be noted that unless otherwise specified and limited, the terms "mounted", "connected", and "connection" should be generally understood, for example, the "connection" may be fixed connection, detachable connection, integral connection, mechanical connection, electrical connection, direct connection, connection by a medium, or internal communication between two elements. A person of ordinary skill in the art may understand the specific meanings of the above terms in the present application according to specific circumstances.

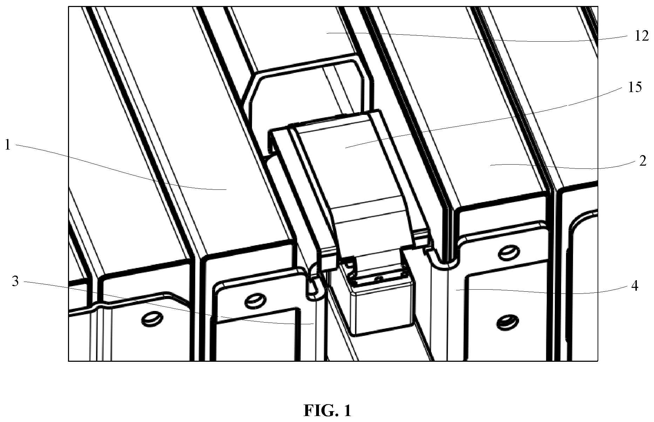

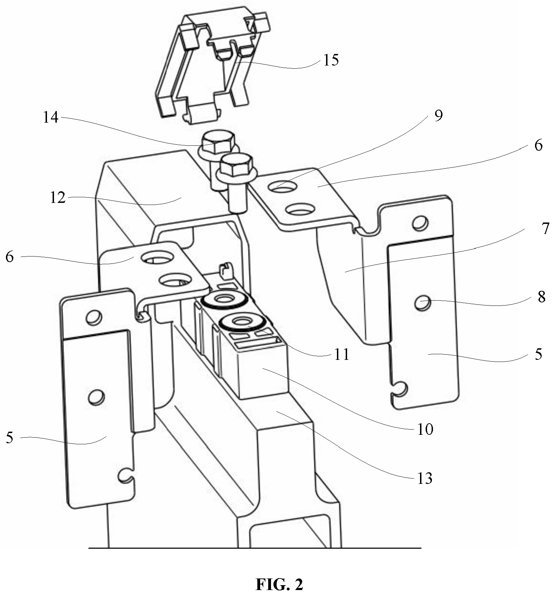

A module connection structure and a power battery according to the embodiments of the present application will be described below with reference to FIG. 1 and FIG. 2.

As shown in FIG. 1 and FIG. 2, the embodiments of the present application provide a module connection structure. The module connection structure includes: modules, current collecting members, and support bases 10, where the current collecting member includes a first connection portion 5 and a second connection portion 6, the first connection portion 5 is connected to an output terminal of the module, each module is correspondingly connected to one current collecting member, the second connection portion 6 is connected to the support base 10 to ensure the stability of the current collecting member relative to the module and the support base 10, and the second connection portions 6 of the current collecting members on the two adjacent modules are connected to the same support base 10; and the second connection portions 6 of the two current collecting members are in contact with each other and conductive, thereby connecting the two modules in series.

Specifically, two modules are described in detail. The two modules are respectively the first module 1 and the second module 2, the first module 1 and the second module 2 are arranged side by side, and electrode terminals of battery cells in the module are arranged on one side or both sides of the battery cells in a length direction. Preferably, the first module 1 and the second module 2 have the same structure, both being in the shape of a rectangular parallelepiped. In addition, the first module 1 and the second module 2 are arranged along a thickness direction of the modules.

Furthermore, the current collecting member further includes a bent connection portion 7, the bent connection portion 7 is located between the first connection portion 5 and the second connection portion 6, and the bent connection portion 7 is simultaneously connected to the first connection portion 5 and the second connection portion 6. Preferably, the first connection portion 5, the bent connection portion 7, and the second connection portion 6 form an integrated structure.

The first connection portion 5, the bent connection portion 7, and the second connection portion 6 are all plate-like or sheet-like. Preferably, the first connection portion 5, the bent connection portion 7, and the second connection portion 6 are in different planes. In the state shown in FIG. 2, the first connection portion 5 extends vertically, the bent connection portion 7 is arranged on a left or right side of the first connection portion 5, the bent connection portion 7 is arranged at an angle with the first connection portion 5, and the bent connection portion 7 faces a side wall of the module. Preferably, the bent connection portion 7 is arranged perpendicular to the first connection portion 5. The second connection portion 6 is arranged on an upper side of the bent connection portion 7 and extends towards one side of the support base 10. Preferably, the second connection portion 6 is arranged perpendicular to the bent connection portion 7.

Further, the quantity of current collecting members is the same as the quantity of modules. In this embodiment, the quantity of current collecting members may be but is not limited to two, respectively the first current collecting member 3 and the second current collecting member 4. The first connection portion 5 of the first current collecting member 3 is connected to the output terminal at one end of the first module 1, and the second connection portion 6 of the first current collecting member 3 is erected on the support base 10 and fixed to the support base 10. Similarly, the first connection portion 5 of the second current collecting member 4 is connected to the output terminal at one end of the second module 2, and the second connection portion 6 of the second current collecting member 4 is erected on the support base 10 and is stacked on and in contact with the second connection portion 6 of the first current collecting member 3, to connect the first module 1 and the second module 2 in series. In addition, the first current collecting member 3 and the second current collecting member 4 are simultaneously fixed to the support base 10, to ensure the structural strength and stability of the module connection structure. The second connection portions 6 of the two current collecting members are fixed to the support base 10 in a stacked manner, thereby effectively reducing space occupation of a connection position between the two modules, effectively saving and utilizing the space between the modules, and effectively reducing the sizes of voltage integration modules and a battery pack using the module connection structure.

Furthermore, the first connection portion 5 is provided with a first fixing portion 8. Preferably, the first fixing portion 8 is a hole structure that penetrates the first connection portion 5. The first connection portion 5 is connected to the output terminal of the module, and the connection method may include but is not limited to welding, or the first connection portion is connected to the module by inserting a screw, a rivet, or a fastener in another form into the first fixing portion 8, ensuring the connection strength between the first connection portion 5 and the module. More preferably, the quantity of first fixing portions 8 is at least two.

Furthermore, the second connection portion 6 is provided with a second fixing portion 9, and an upper surface of the support base 10 is provided with a third fixing portion 11. Preferably, the second fixing portion 9 is a hole structure that penetrates the second connection portion 6, and the third fixing portion 11 is a hole structure or groove opposite to the second fixing portion 9. Preferably, the quantity of second fixing portions 9 is at least two, and the quantity of third fixing portions 11 is the same as and corresponds to the quantity of second fixing portions 9. The second fixing portion 9 is connected to the third fixing portion 11 after a screw, a rivet, or a fastener 14 in another form is inserted into the second fixing portion, to fix the second connection portion 6 to the support base 10. The second connection portion 6 is fixed to the support base 10 by using two or more fasteners, thereby effectively preventing cracking or even fracture at a bent point of the current collecting member due to the tilting or pulling of the second connection portion 6 and the entire current collecting member, and then effectively reducing the risk of connection failure in the current collecting member.

Furthermore, the module connection structure further includes a fixed beam 12. Preferably, the fixed beam 12 is a steel beam. The fixed beam 12 is arranged between the first module 1 and the second module 2. A large surface of the first module 1 and a large surface of the second module 2 face side walls of the fixed beam 12 respectively.

In the state shown in FIG. 2, an upper side of the fixed beam 12 is provided with a mounting portion 13, the mounting portion 13 is arranged near an end of the fixed beam 12, and the mounting portion 13 is used to mount the support base 10. Preferably, the mounting portion 13 is specifically a gap that forms the fixed beam 12. Specifically, a height of the mounting portion 13 is less than a height of an upper side of the support base 10, so that an upper surface of the mounting portion 13 sinks a certain depth relative to an upper surface of the support base 10. The support base 10 is arranged on the upper surface of the mounting portion 13. After the support base 10 is fixed to the mounting portion 13, the support base 10 will not protrude relative to the support base 10, avoiding additional space occupation.

Preferably, the mounting portion 13 is thinned, so that a thickness of the mounting portion 13 is less than a thickness of the fixed beam 12. After the second connection portion 6 is fixed to the support base 10, a first distance is formed between the bent connection portion 7 of the current collecting member and a side wall of the mounting portion 13, and a second distance is formed between a side wall of the module and a side wall of the fixed beam 12. It should be noted that the second distance is specifically a distance between a side wall of the module and a partial side wall of the fixed beam 12 except for the mounting portion 13. The first distance is greater than the second distance, so that the bent connection portion 7 of the current collecting member is spaced apart from the mounting portion 13 and the partial side wall of the fixed beam 12 except for the mounting portion 13, to avoid contacting each other, thereby avoiding insulation failure. Preferably, an outer surface of the fixed beam 12 is covered with an insulating layer. More preferably, the insulating layer may include but is not limited to an insulating tape.

Furthermore, the module connection structure further includes a protective cover 15, the protective cover 15 is made of an insulating material, and the support base 10 is also made of an insulating material. The protective cover 15 is used to cover the support base 10, thereby covering the second connection portion 6 of the first current collecting member 3, the second connection portion 6 of the second current collecting member 4, and connection positions with the support base 10, further increasing the strength and stability of the connection structure.

Preferably, the protective cover 15 is hinged to the support base 10, so that the protective cover 15 can be opened or closed relative to the support base 10 in a rotating manner, facilitating the connection and fixation of the second connection portion 6 with the support base 10. The connection method between the protective cover 15 and the support base 10 is not limited to this, and detachable connection methods such as snap fasteners can also be used.

In summary, according to the module connection structure provided in the present application, overlap portions of two current collecting members are fixed to the same support base 10 by partially stacking the current collecting members, thereby connecting the two modules in series. On the basis of ensuring the connection strength and connection stability between the current collecting member and the module and between the current collecting members, such design effectively reduces space occupation of module connection positions, connection difficulty, and time consumption for module connection, and can effectively reduce the sizes of voltage integration modules. Therefore, the module connection structure is suitable for most types of module connections and battery packaging and assembly processes.

The embodiments of the present application further provide a power battery, including the module connection structure described in any of the above embodiments. Therefore, the power battery has all beneficial technical effects of the module connection structure. Details will not be repeated here.

Finally, it should be noted that the above embodiments are merely used to illustrate the technical solutions of the present application, rather than limiting the present application. Although the present application is described in detail with reference to the foregoing embodiments, those of ordinary skill in the art should understood that: modifications can still be made to the technical solutions recorded in the foregoing embodiments, or equivalent replacements can be made to some or all of the technical features; and these modifications or replacements do not make the essence of the corresponding technical solutions deviate from the scope of the technical solutions of the embodiments of the present application.

### Industrial Applicability

According to the module connection structure provided in the present application, overlap portions of two current collecting members are fixed to the same support base by partially stacking the current collecting members, thereby connecting the two modules in series. On the basis of ensuring the connection strength and connection stability between the current collecting member and the module and between the current collecting members, such design effectively reduces space occupation of module connection positions, connection difficulty, and time consumption for module connection.

## Claims

1. A module connection structure, comprising:
modules;
current collecting members, wherein the current collecting member comprises a first connection portion and a second connection portion, and the first connection portion is connected to the module; and
support bases, wherein the second connection portions of the current collecting members on the adjacent modules are stacked and fixed to the same support base.

2. The module connection structure as claimed in claim 1, wherein the current collecting member further comprises a bent connection portion, and the bent connection portion is located between the first connection portion and the second connection portion.

3. The module connection structure as claimed in claim 1, wherein the first connection portion is provided with a first fixing portion, and the first fixing portion is connected to an end surface of the module; and
the second connection portion is provided with a second fixing portion, the support base is provided with a third fixing portion, and the second fixing portion is connected to the third fixing portion.

4. The module connection structure as claimed in claim 3, wherein the second connection portion and the first connection portion are located in different planes, and the second connection portion is provided with the second fixing portion; the second connection portion is erected on the support base, and the second fixing portion is connected to the support base.

5. The module connection structure as claimed in claim 2, wherein the module connection structure further comprises a fixed beam, the fixed beam is formed with a mounting portion, and the support base is arranged on the mounting portion; and
a height of the mounting portion is less than a height of the fixed beam.

6. The module connection structure as claimed in claim 5, wherein a thickness of the mounting portion is less than a thickness of the fixed beam.

7. The module connection structure as claimed in claim 5, wherein a first distance is formed between the bent connection portion and the mounting portion; and a second distance is formed between the module and the fixed beam, wherein the first distance is greater than the second distance.

8. The module connection structure as claimed in claim 5, wherein the fixed beam is provided with an insulating layer.

9. The module connection structure as claimed in any one of claims 1 to 8, wherein the module connection structure further comprises a protective cover, and the protective cover is arranged on the support base.

10. A power battery, comprising the module connection structure as claimed in any one of claims 1 to 9.
